# EUROPEAN PATENT SPECIFICATION

(11) **EP 2 398 563 B1**
(45) Date of publication and mention of the grant of the patent: **29.10.2014**
(21) Application number: 10707309.0
(22) Date of filing: 12.02.2010
(51) Int. Cl.: A62C 2/20, F16L 5/04, F16L 55/10, F24F 13/062

(54) **VENTILATION-DUCT FIRE DAMPER AND METHOD**
VENTILATIONSROHR-FEUERDÄMPFER UND EINBAUMETHODE
REGISTRE COUPE-FEU DE CONDUIT DE VENTILATION ET PROCÉDÉ CORRESPONDANT

(30) Priority: 23.02.2009 FI 20095172
(43) Date of publication of application: 28.12.2011
(73) Proprietor: Halton OY, 47400 Kausala (FI)
(72) Inventor: HAGSTRÖM, Kim, FI-15520 Lahti (FI); HEINO, Pekka, FI-47310 Haapakimola (FI); VUORIO, Jarno, FI-45910 Voikkaa (FI); PARKKILA, Raimo, FI-47400 Kausala (FI)
(74) Representative: Papula Oy
(86) International application number: PCT/FI2010/050094
(87) International publication number: WO 2010/094835

(56) References cited:
- EP-A1- 1 095 672
- DE-U1-202006 010 096
- FI-B- 55 767
- FR-A1- 2 371 557

## Description

### FIELD OF INVENTION

The invention relates to a fire damper of a ventilation duct according to the preamble of claim 1.

The invention also relates to a method according to the preamble of claim 7.

### PRIOR ART

Fire dampers are usually located in a ventilation duct between two different fire compartments. Fire dampers aim at preventing fire from spreading from one fire compartment to another fire compartment.

Patent FI55767 describes a fire damper to be connected to a supply or exhaust air duct of a ventilation installation. The fire damper has an operation which forces a valve regulating element to close the valve in the event of fire in a flow duct. The valve comprises a conical collar and a conical disc fitted in the conical collar. Between the conical collar and the conical disc is formed a flow duct the cross-sectional area of which can be adjusted by moving the disc in relation to the collar in the axial direction. The disc has a threaded hole in which is fitted a first end of a threaded stem. The second end of the threaded stem is connected to a bail the ends of which are fastened in the conical collar. Within the disc is arranged a trigger and closing mechanism of the fire damper which in the event of fire performs an automatic quick-closing of the disc against the conical collar. Via the bail, the valve can be fastened in a frame by rotating. The frame comprises a cylindrical section to be installed in the supply or exhaust air duct and an outer flange which comes directly against a wall surface. It is possible to use a fire insulating seal between the outer flange of the frame coming against the wall surface and the conical collar of the valve.

Patent EP1095672 also describes a fire damper of a ventilation installation. The principal structures of the valve and the frame are here equivalent to the ones of the valve and frame of the above patent FI55767. The valve is fastened to the frame via an annular piece of heat-resistant material, being castable. Said annular piece forms the only mechanical connection between the conical collar of the valve and the frame surrounding it.

Another known fire damper is described in FR 2371557.

### SUMMARY OF INVENTION

The aim of the arrangement according to the invention is to minimise disadvantages related to prior-art arrangements or to eliminate them totally.

The principal characteristics of a fire damper of a ventilation duct according to the invention are presented in the characterising part of claim 1.

The principal characteristics of a method according to the invention are presented in the characterising part of claim 6.

Other characteristics of the invention are presented in the dependent claims.

The fire damper according to the invention comprises a frame extending through a hole in a wall structure installable at the end of a ventilation duct and a valve installable in the frame. The frame comprises a substantially cylindrical inner section and a substantially flange-shaped outer section. The valve comprises a closing cone and a counter cone between which is formed a flow duct and a trigger mechanism with which the closing cone is triggered against the counter cone for closing the flow duct in the event of fire. The counter cone has a conical inner section and a split annular outer section. The fire damper utilises two fire insulating seals. The first fire insulating seal is located between the outer section of the counter cone of the valve and the outer section of the frame. The second fire insulating seal is located between the outer section of the frame and the outer surface surrounding the hole in the wall structure and the end of the ventilation duct.

The fire damper according to the invention is inexpensive and simple to manufacture as well as easy to install and maintain. The use of elastic, heat-resistant fire insulating seals to seal leakages is a simple and cost-effective way to prevent fire from spreading via the fire damper to other spaces.

The arrangement according to the invention is applicable to all wall structures.

The use of the second fire insulating seal between the outer section of the frame and the outer surface surrounding the hole in the wall structure and the end of the ventilation duct protects the outer surface of the wall surrounding the hole in the wall structure from chipping. For instance, the surface of a plasterboard is easily chipped when the outer section of the frame in time rubs against the plasterboard. Then, a leakage can be created between the frame and the plasterboard, due to which the fire damper will not form a fire blockage as tight as required.

The invention will now be described with reference to the figures of the accompanying drawings.

### BRIEF DESCRIPTION OF FIGURES

Fig. 1 shows a schematic view of a fire damper of a ventilation duct according to the invention.
Fig. 2 shows a trigger mechanism applicable to the fire damper according to Fig. 1 in its excited state.
Fig. 3 shows the trigger mechanism of Fig. 2 as triggered.

### DESCRIPTION OF ADVANTAGEOUS EMBODIMENTS

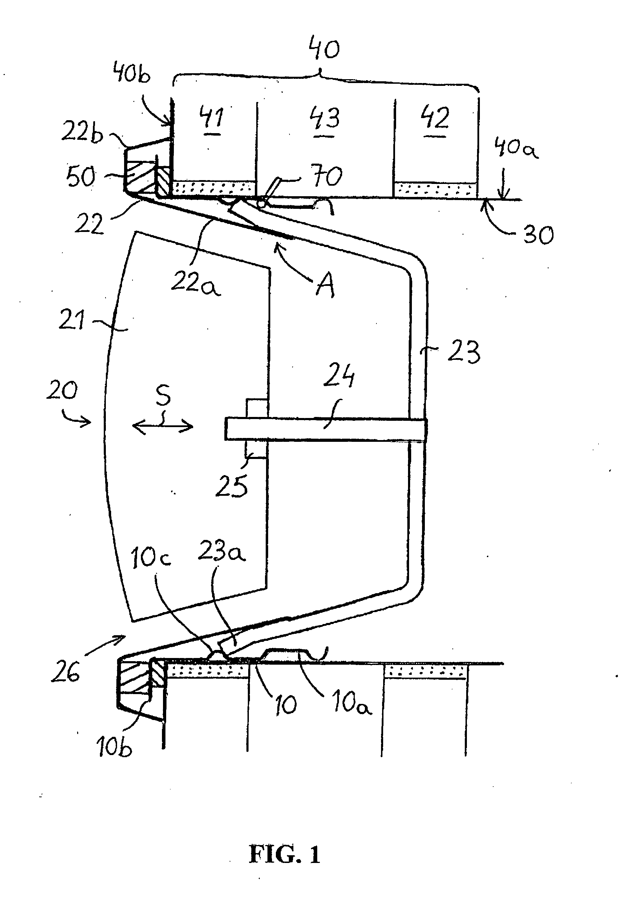

Fig. 1 shows a schematic view of a fire damper of a ventilation duct according to the invention.

The fire damper consists of a frame 10 which in connected to a ventilation duct 30 extending through a hole 40a. in .a wall structure 40 and of a valve 20 connected to the frame 10. The valve 20 comprises a closing cone 21, a counter cone 22, a bail 23 which is fixedly connected to the counter cone 22 in a connection point A, and a stem 24 with which the closing cone 21 is movably connected to the bail 23.

The frame 10 of the fire damper comprises a substantially cylindrical inner section 10a and a substantially flange-shaped outer section 10b which has an inner surface and an outer surface. The inner section 10a of the frame 10 sets against the inner surface of the ventilation duct 30 and the outer section 10b of the frame sets against an outer surface 40b surrounding the hole 40a in the wall structure 40 and the end of the duct 30. The wall structure 40 here comprises an outer panel 41 and an inner panel 42 and an insulating layer 43 between them. The frame 10 is fastened of its inner section 10a in the duct 30 with fastening means 70, e.g. screws.

The counter cone 22 of the valve 20 of the fire damper consists of a truncated conical inner section 22a and a split annular outer section 22b. The inner section 22a sets in the ventilation duct 30 and the outer section sets against the side surface 40b surrounding the hole 40a in the wall structure 40. Between the closing cone 21 and the counter cone 22 is formed a conical flow duct 26 from which air can enter the ventilation duct 30 or exit it. The stem 24 advantageously consists of a threaded tap, whereby the closing cone 21 includes a nut 25 in which the threaded tap 24 sets. The closing cone 21 is thus movable in the axial direction S in relation to the counter cone 22, whereby the area of the duct 26 between the closing cone 21 and the counter cone 22 is adjustable.

Between the outer section 22b of the counter cone 22 and the outer surface of the outer section 10b of the frame 10, there is a first fire insulating seal 50. Between the inner surface of the outer section 10b of the frame 10 and the side surface 40b surrounding the hole 40a in the wall structure 40 and the end of the duct 30, there is a second fire insulating seal 51. These seals 50, 51 are located in the axial direction S opposite each other on both sides of the outer section 10b of the frame. 10. Both fire insulating seals 50, 51 consist of an elastic material resistant to high temperatures, an example of which is the insulating material marketed with trademark Kerafix 2000 owned by a company called Trader-Koo Oy. The wall lead-in of the ventilation duct 30 is also sealed properly against the spreading of fire.

The valve 20 can be fastened in the frame 10 by rotating such that slightly outwards deflected ends 23a of the bail 23 set against stoppers 10c in the inner section 10a of the frame 10. The stoppers 10c are advantageously designed such that rotating the valve 20 to the frame 10 simultaneously presses down the first fire insulating seal 50 within the outer section 22b of the counter cone 22 tightly against the outer section 10a of the frame 10. The valve 20 thus supports itself to the frame 10 via two support locations at a distance from each other in the axial direction S. The first support location is formed of two support points between the ends 23a of the bail 23 and the inner section 10a of the frame. The second support location is formed via a circular support point formed by the first fire insulating seal 50 between the outer section 22b of the counter cone 22 and the outer section 10b of the frame 10.

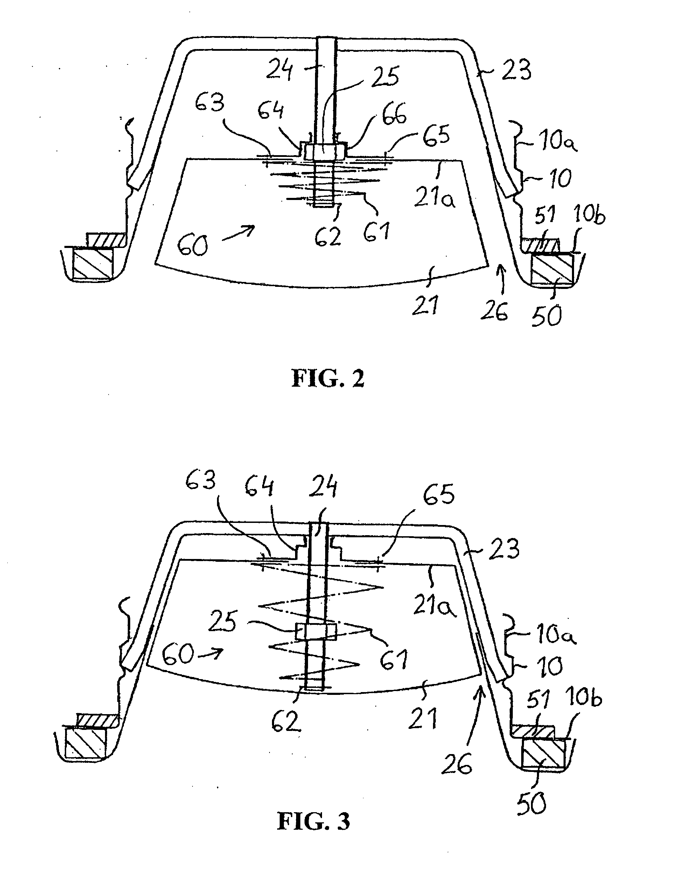

Fig. 2 shows a trigger mechanism applicable to the fire damper according to Fig. 1 in its excited state, and Fig. 3 shows the trigger mechanism as triggered. This trigger mechanism is known as such from the above patent F155767. The trigger mechanism 60 comprises .a diaphragm spring 61 installed around the threaded tap 24, which supports itself of its one end to the end of the threaded tap 24 in a washer 62 fastened e.g. with a pin and of its other end on the inner surface of a bottom 21a of the closing cone 21. The trigger mechanism 60 also comprises a flange 63 fastened onto the outer surface of the bottom 21a of the closing cone 21 e.g. with rivets 65, which includes a formed part 64 closing the nut 25 within itself. The nut 25 is fastened in the formed part 64 of the flange 63 with a solder joint 66 which forms a fuse melting in a specific temperature. In the situation of Fig. 2, the diaphragm spring 61 is pressed down and ready to trigger the fire damper as soon as the fuse 66 has melted.

In the event of fire and temperature rising in the flow duct 26 to a temperature which melts the fuse 66, the locking between the nut 25 and the formed part 64 of the flange 63 is released, whereby the spring 61 forces the freely-movable closing cone 21 to close the flow duct 26 totally, as shown in Fig. 3.

Figs. 2 and 3 show a trigger mechanism applicable to the fire damper according to the invention but, from the viewpoint of the invention, it is possible to use any trigger mechanism known by those skilled in the art.

## Claims

1. A fire damper of a ventilation duct comprises:
- a frame (10) comprising a substantially cylindrical inner section (10a) and a substantially flange-shaped outer section (10b) which has an inner surface and an outer surface, said frame (10) being installed at the end of a ventilation duct (30) extending through a hole (40a) in a wall structure (40) such that the inner section (10a) of the frame (10) sets against the inner surface of the ventilation duct (30) and that the outer section (10b) of the frame (10) sets against a wall surface (40b) surrounding the hole (40a) in the wall structure (40) at the end of the ventilation duct (30),
- a valve (20) comprising a closing cone (21) and a counter cone (22) between which is formed a flow duct (26), which counter cone (22) consists of a conical inner section (22a) and a split annular outer section (22b), and a trigger mechanism (60) with which the closing cone (21) is triggered against the counter cone (22) for closing the flow duct (26) between the closing cone (21) and the counter cone (22) in the event of fire, said valve (20) being installed in the frame (10) such that the inner section (22a) of the counter cone (22) sets within the inner section (10a) of the frame (10) and the outer section (22b) of the counter cone (22) sets against the outer section (10b) of the frame (10),
- a first fire insulating seal (50) which is fastened within the split annular outer section (22b) of the counter cone (22), whereby the first fire insulating seal (50) seals the connection between the outer section (22b) of the counter cone (22) and the outer section (10b) of the frame (10),
**characterised in that** the fire damper further comprises:
- a second fire insulating seal (51) which is fastened on the inner surface of the outer section (10b) of the frame (10), whereby the second fire insulating seal (51) seals the connection between the outer section (10b) of the frame (10) and the wall surface (40b) surrounding the hole (40a) at the end of the ventilation duct (30).

2. A fire damper according to claim 1, **characterised in that** the valve (20) further comprises a bail (23) which is fixedly connected to the counter cone (22) at a connection point (A) and a stem (24) with which the closing cone (21) is movably connected to the bail (23).

3. A fire damper according to claim 2, **characterised in that** the stem (24) consists of a threaded tap which sets in a nut (25) in the closing cone (21), whereby the closing cone (21) is movable in the axial direction (S) in relation to the counter cone (22) for adjusting the area of the duct (26) between the closing cone (21) and the counter cone (22).

4. A fire damper according to any one claims 1 - 3, **characterised in that** the trigger mechanism (60) comprises:
- a diaphragm spring (61) installed around a threaded tap (24) which supports itself of its one end to a washer (62) fastened at the end of the threaded tap (24) and of its other end on the inner surface of a bottom (21a) of the closing cone (21), and
- a flange (63) fastened on the outer surface of the bottom (21a) of the closing cone (21), which includes a formed part (64) closing the nut (25) within, in which formed part (64) the nut (25) is fastened with a solder joint (66) which solder joint (66) forms a fuse melting at a specific temperature, whereby the melting of the fuse (66) in the event of fire releases the locking between the nut (25) and the formed part (64) of the flange (63), as a result of which the diaphragm spring (61) forces the freely-movable closing cone (21) to close the flow duct (26) totally.

5. A fire damper according to claim 4, **characterised in that** the fire damper further comprises fastening means (70) with which the frame (10) is fastened of its cylindrical inner section (10a) in the ventilation duct (30).

6. A method in connection with a fire damper of a ventilation duct, **characterised by**:
- installing a frame (10) of the fire damper at the end of a ventilation duct (30) extending through a hole (40a) in a wall structure (40) such that a substantially cylindrical inner section (10a) of the frame (10) sets within the ventilation duct (30) and that a substantially flange-shaped outer section (10b) of the frame (10) sets against a wall surface (40b) surrounding the hole (40a) in the wall structure (40) at the end of the ventilation duct (30),
- installing a valve (20) in the frame (10), said valve (20) comprising a closing cone (21) and a counter cone (22) between which is formed a flow duct (26), which counter cone (22) consists of a conical inner section (22a) and a split annular outer section (22b), and a trigger mechanism (60) with which the closing cone (21) is triggered against the counter cone (22) for closing the flow duct (26) between the closing cone (21) and the counter cone (22) in the event of fire, the valve (20) being installed in the frame (10) such that the inner section (22a) of the counter cone (22) sets within the inner section (10a) of the frame (10) and the outer section (22b) of the counter cone (22) sets against the outer section (10b) of the frame (10),
- installing a first fire insulating seal (50) between the outer section (22b) of the counter cone (22) and the outer section (10b) of the frame (10) in order to seal the connection between the outer section (22b) of the counter cone (22) and the outer section (10b) of the frame (10),
**characterised by**:
- installing a second fire insulating seal (51) between the outer section (10b) of the frame (10) and the wall surface (40b) surrounding the hole (40a) in the wall structure (40) at the end of the duct (30) in order to seal the connection between the outer section (10b) of the frame (10) and the wall surface (40b) surrounding the hole (40a) at the end of the ventilation duct (30).

7. A method according to claim 6, **characterised by** fastening the frame (10) of its inner section (10b) in the ventilation duct (30) with fastening means (70).

## Patentansprüche

1. Brandklappe eines Lüftungskanals umfassend:
- einen Rahmen (10) umfassend einen im Wesentlichen zylindrischen Innenbereich (10a) und einen im Wesentlichen flanschförmigen Außenbereich (10b), welcher eine innere Oberfläche und eine äußere Oberfläche aufweist, wobei der Rahmen (10) am Ende eines sich durch ein Loch (40a) in einer Wandstruktur (40) erstreckenden Lüftungskanals (30) installiert ist, so dass der Innenbereich (10a) des Rahmens (10) gegen die innere Oberfläche des Lüftungskanals (30) angestellt ist und dass der Außenbereich (10b) des Rahmens (10) gegen eine das Loch (40a) in der Wandstruktur (40) am Ende des Lüftungskanals (30) umgebende Wandoberfläche (40b) angestellt ist,
- ein Ventil (20) umfassend einen Schließkonus (21) und einen Gegenkonus (22), zwischen welchen ein Strömungskanal (26) gebildet ist, wobei der Gegenkonus (22) aus einem konischen Innenbereich (22a) und einem gesplitteten ringförmigen Außenbereich (22b) besteht, und einen Trigger-Mechanismus (60), mit dem der Schließkonus (21) gegen den Gegenkonus (22) ausgelöst wird, um den Strömungskanal (26) zwischen dem Schließkonus (21) und dem Gegenkonus (22) im Fall eines Feuers zu schließen, wobei das Ventil (20) derart in dem Rahmen installiert ist, dass der Innenbereich (22a) des Gegenkonus (22) innerhalb des Innenbereichs (10a) des Rahmens (10) angestellt ist und der Außenbereich (22b) des Gegenkonus (22) gegen den Außenbereich (10b) des Rahmens (10) angestellt ist,
- eine erste Feuerdämmdichtung (50), welche innerhalb des gesplitteten ringförmigen Außenbereichs (22b) des Gegenkonus (22) befestigt ist, wobei die erste Feuerdämmdichtung (50) die Verbindung zwischen dem Außenbereich (22b) des Gegenkonus (22) und dem Außenbereich (10b) des Rahmens (10) abdichtet,
**dadurch gekennzeichnet, dass** die Brandklappe weiterhin umfasst:
- eine zweite Feuerdämmdichtung (51), welche an der inneren Oberfläche des Außenbereichs (10b) des Rahmens (10) befestigt ist, wobei die zweite Feuerdämmdichtung (51) die Verbindung zwischen dem Außenbereich (10b) des Rahmens (10) und der das Loch (40a) am Ende des Lüftungskanals (30) umgebenden Wandoberfläche (40b) abdichtet.

2. Brandklappe nach Anspruch 1, **dadurch gekennzeichnet, dass** das Ventil (20) weiterhin einen Bügel (23), welcher fest mit dem Gegenkonus (22) an einem Verbindungspunkt (A) verbunden ist, und einen Schaft (24), mit welchem der Schließkonus (21) beweglich mit dem Bügel (23) verbunden ist, umfasst.

3. Brandklappe nach Anspruch 2, **dadurch gekennzeichnet, dass** der Schaft (24) aus einem Gewindebolzen besteht, welcher in eine Mutter (25) in dem Schließkonus (21) eintritt, wobei der Schließkonus (21) in der axialen Richtung (S) in Bezug auf den Gegenkonus (22) beweglich ist, um die Fläche des Kanals (26) zwischen dem Schließkonus (21) und dem Gegenkonus (22) einzustellen.

4. Brandklappe nach einem der Ansprüche 1 bis 3, **dadurch gekennzeichnet, dass** der Trigger-Mechanismus (60) umfasst:
- eine um den Gewindebolzen (24) installierte Membranfeder (61), welche sich selbst an ihrem einen Ende an einer am Ende des Gewindebolzens (24) befestigten Scheibe (62) und an ihrem anderen Ende an der inneren Oberfläche eines Bodens (21a) des Schließkonus (21) abstützt, und
- einen an der äußeren Oberfläche des Bodens (21a) des Schließkonus (21) befestigten Flansch (63), welcher ein die Mutter (25) umschließendes Formteil (64) beinhaltet, wobei in dem Formteil (64) die Mutter (25) mit einer Lötstelle (66) befestigt ist, wobei die Lötstelle (66) eine bei einer bestimmten Temperatur schmelzende Sicherung bildet, wobei das Schmelzen der Sicherung (66) im Fall eines Feuers den Verschluss zwischen der Mutter (25) und dem Formteil (64) des Flansches (63) löst, wodurch die Membranfeder (61) den freibeweglichen Schließkonus (21) zum kompletten Schließen des Strömungskanals (26) antreibt.

5. Brandklappe nach Anspruch 4, **dadurch gekennzeichnet, dass** die Brandklappe weiterhin Befestigungsmittel (70) umfasst, mit denen der Rahmen (10) an seinem zylindrischen Innenbereich (10a) in dem Lüftungskanal (30) befestigt ist.

6. Verfahren in Verbindung mit einer Brandklappe eines Lüftungskanals, **gekennzeichnet durch**:
- Installieren eines Rahmens (10) der Brandklappe an dem **durch** ein Loch (40a) in einer Wandstruktur (40) sich erstreckenden Ende eines Lüftungskanals (30), so dass ein im Wesentlichen zylindrischer Innenbereich (10a) des Rahmens (10) innerhalb des Lüftungsrohrs (30) angeordnet ist und dass ein im Wesentlichen flanschförmiger Außenbereich (10b) des Rahmens (10) gegen die das Loch (40a) in der Wandstruktur (40) an dem Ende des Lüftungsrohrs (30) umgebende Wandoberfläche (40b) ansteht,
- Installieren eines Ventils (20) in dem Rahmen (10), wobei das Ventil (20) einen Schließkonus (21) und einen Gegenkonus (22) umfasst, zwischen welchen ein Strömungskanal (26) gebildet ist, wobei der Gegenkonus (22) aus einem konischen Innenbereich (22a) und einem gesplitteten ringförmigen Außenbereich (22b) besteht, und eines Trigger-Mechanismus (60), mit welchem der Schließkonus (21) gegen den Gegenkonus (22) ausgelöst wird, um den Strömungskanal (26) zwischen dem Schließkonus (21) und dem Gegenkonus (22) im Fall eines Feuers zu schließen, wobei das Ventil (20) in dem Rahmen (10) derart installiert ist, dass der Innenbereich (22a) des Gegenkonus (22) innerhalb des Innenbereichs (10a) des Rahmens (10) angestellt ist und der Außenbereich (22b) des Gegenkonus (22) gegen den Außenbereich (10b) des Rahmens (10) ansteht,
- Installieren einer ersten Feuerdämmdichtung (50) zwischen dem Außenbereich (22b) des Gegenkonus (22) und dem Außenbereich (10b) des Rahmens (10), um die Verbindung zwischen dem Außenbereich (22b) des Gegenkonus (22) und dem Außenbereich (10b) des Rahmens (10) abzudichten,
**gekennzeichnet durch**:
- Installieren einer zweiten Feuerdämmdichtung (51) zwischen dem Außenbereich (10b) des Rahmens (10) und der das Loch (40a) in der Wandstruktur (40) am Ende des Kanals (30) umgebenden Wandoberfläche (40b), um die Verbindung zwischen dem Außenbereich (10b) des Rahmens (10) und der das Loch (40a) am Ende des Lüftungsrohrs (30) umgebenden Wandoberfläche (40b) abzudichten.

7. Verfahren nach Anspruch 6, **gekennzeichnet durch** das Befestigen des Rahmens (10) an seinem Innenbereich (10b) in dem Lüftungskanal (30) **durch** Befestigungsmittel (70).

## Revendications

1. Registre coupe-feu d'un conduit de ventilation comprenant :
- un châssis (10) comprenant une section intérieure sensiblement cylindrique (10a) et une section extérieure sensiblement en forme de bride (10b) qui possède une surface intérieure et une surface extérieure, ledit châssis (10) étant installé à l'extrémité d'un conduit de ventilation (30) s'étendant dans un trou (40a) situé dans une structure de paroi (40) de sorte que la section intérieure (10a) du châssis (10) soit placée contre la surface intérieure du conduit de ventilation (30) et que la section extérieure (10b) du châssis (10) soit placée contre une surface de paroi (40b) entourant le trou (40a) de la structure de paroi (40) à l'extrémité du conduit de ventilation (30),
- une valve (20) comprenant un cône de fermeture (21) et un contre-cône (22) entre lesquels est formé un conduit d'écoulement (26), ledit contre-cône (22) se composant d'une section intérieure conique (22a) et d'une section extérieure annulaire divisée (22b), et un mécanisme de déclenchement(60) grâce auquel le cône de fermeture (21) est amené contre le contre-cône (22) pour fermer le conduit d'écoulement (26) entre le cône de fermeture (21) et le contre-cône (22) en cas d'incendie, ladite valve (20) étant installée dans le châssis (10) de sorte que la section intérieure (22a) du contre-cône (22) se trouve dans la section intérieure (10a) du châssis (10) et que la section extérieure (22b) du contre-cône (22) se trouve contre la section extérieure (10b) du châssis (10),
- un premier joint d'isolation contre le feu (50) qui est fixé dans la section extérieure annulaire divisée (22b) du contre-cône (22), moyennant quoi le premier joint d'isolation contre le feu (50) obture de manière étanche la liaison entre la section extérieure (22b) du contre-cône (22) et la section extérieure (10b) du châssis (10),
**caractérisé en ce que** le registre coupe-feu comprend en outre :
- un second joint d'isolation contre le feu (51) qui est fixé sur la surface intérieure de la section extérieure (10b) du châssis (10), moyennant quoi le second joint d'isolation contre le feu (51) obture de manière étanche la liaison entre la section extérieure (10b) du châssis (10) et la surface de paroi (40b) entourant le trou (40a) à l'extrémité du conduit de ventilation (30).

2. Registre coupe-feu selon la revendication 1, **caractérisé en ce que** la valve (20) comprend en outre une anse (23) qui est reliée à demeure au contre-cône (22) au niveau d'un point de liaison (A) et une tige (24) grâce à laquelle le cône de fermeture (21) est relié mobile à l'anse (23).

3. Registre coupe-feu selon la revendication 2, **caractérisé en ce que** la tige (24) se compose d'un filetage qui s'introduit dans un écrou (25) dans le cône de fermeture (21), moyennant quoi le cône de fermeture (21) est mobile dans la direction axiale (S) par rapport au contre-cône (22) pour ajuster la superficie du conduit (26) entre le cône de fermeture (21) et le contre-cône (22).

4. Registre coupe-feu selon l'une quelconque des revendications 1 à 3, **caractérisé en ce que** le mécanisme de déclenchement (60) comprend :
- un ressort (61) à diaphragme installé autour d'un filetage (24) qui s'auto-soutient par une première extrémité sur une rondelle (62) fixée à l'extrémité du filetage (24) et par son autre extrémité sur la surface intérieure d'un fond (21a) du cône de fermeture (21),
et
- une bride (63) fixée sur la surface extérieure du fond (21a) du cône de fermeture (21), qui comprend une partie formée (64) renfermant l'écrou (25), dans laquelle partie formée (64) l'écrou (25) est fixé à l'aide d'un joint à brasure tendre (66), ledit joint à brasure tendre (66) formant un fusible fondant à une température spécifique, moyennant quoi la fusion du fusible (66) en cas d'incendie libère le verrouillage entre l'écrou (25) et la partie formée (64) de la bride (63), à la suite de quoi le ressort (61) à diaphragme pousse le cône de fermeture (21) à mobilité libre pour fermer totalement le conduit d'écoulement (26).

5. Registre coupe-feu selon la revendication 4, **caractérisé en ce que** le registre coupe-feu comprend en outre un moyen de fixation (70) grâce auquel le châssis (10) est fixé par sa section intérieure cylindrique (10a) dans le conduit de ventilation (30).

6. Procédé en association avec un registre coupe-feu d'un conduit de ventilation, **caractérisé par** :
- l'installation d'un châssis (10) du registre coupe-feu à l'extrémité d'un conduit de ventilation (30) s'étendant dans un trou (40a) situé dans une structure de paroi (40) de sorte que la section intérieure sensiblement cylindrique (10a) du châssis (10) soit placée dans le conduit de ventilation (30) et qu'une section extérieure sensiblement en forme de bride (10b) du châssis (10) soit placée contre une surface de paroi (40b) entourant le trou (40a) de la structure de paroi (40) à l'extrémité du conduit de ventilation (30),
- l'installation d'une valve (20) dans le châssis (10), ladite valve (20) comprenant un cône de fermeture (21) et un contre-cône (22) entre lesquels est formé un conduit d'écoulement (26), ledit contre-cône (22) se compose d'une section intérieure conique (22a) et d'une section extérieure annulaire divisée (22b), et un mécanisme de déclenchement (60) grâce auquel le cône de fermeture (21) est amené contre le contre-cône (22) pour fermer le conduit d'écoulement (26) entre le cône de fermeture (21) et le contre-cône (22) en cas d'incendie, la valve (20) étant installée dans le châssis (10) de sorte que la section intérieure (22a) du contre-cône (22) se trouve dans la section intérieure (10a) du châssis (10) et que la section extérieure (22b) du contre-cône (22) se trouve contre la section extérieure (10b) du châssis (10),
- l'installation d'un premier joint d'isolation contre le feu (50) entre la section extérieure (22b) du contre-cône (22) et la section extérieure (10b) du châssis (10) afin d'obturer de manière étanche la liaison entre la section extérieure (22b) du contre-cône (22) et la section extérieure (10b) du châssis (10),
**caractérisé par** :
- l'installation d'un second joint d'isolation contre le feu (51) entre la section extérieure (10b) du châssis (10) et la surface de paroi (40b) entourant le trou (40a) de la structure de paroi (40) à l'extrémité du conduit (30) afin d'obturer de manière étanche la liaison entre la section extérieure (10b) du châssis (10) et la surface de paroi (40b) entourant le trou (40a) à l'extrémité du conduit de ventilation (30).

7. Procédé selon la revendication 6, **caractérisé par** la fixation du châssis (10) par sa section intérieure (10b) dans le conduit de ventilation (30) à l'aide du moyen de fixation (70).
